# EUROPEAN PATENT SPECIFICATION

(11) **EP 4 384 723 B1**
(45) Date of publication and mention of the grant of the patent: **26.11.2025**
(21) Application number: 22856428.2
(22) Date of filing: 02.08.2022
(51) Int. Cl.: F16B 41/00, F16B 37/14, E05B 65/00, B60B 3/00, B60B 3/16, F16B 37/00

(54) **ANTI-THEFT LOCKING BOLT ASSEMBLY**
DIEBSTAHLSICHERE VERRIEGELUNGSBOLZENANORDNUNG
ENSEMBLE BOULON DE VERROUILLAGE ANTIVOL

(30) Priority: 13.08.2021 SE 2150999; 13.08.2021 US 202117401572
(43) Date of publication of application: 19.06.2024
(73) Proprietor: Rimgard Sweden AB, 169 70 Solna (SE)
(72) Inventor: IVARSSON, Lars, 11757 Stockholm (SE); EKSTRÖM, Marcus, 129 33 Hägersten (SE)
(74) Representative: IP Maison
(86) International application number: PCT/US2022/039170
(87) International publication number: WO 2023/018580

(56) References cited:
- US-A1- 2012 000 259
- US-A1- 2017 343 034
- US-A1- 2021 229 489

## Description

### FIELD OF INVENTION

This invention relates to a locking bolt assembly capable of being locked in place to prevent unauthorized removal or use of an article locked with the assembly.

### BACKGROUND OF THE INVENTION

There are various anti-theft solutions available for example to prevent unauthorized removal of car wheels. Some devices specifically meant for car wheels are disclosed for example in the applicant's previous patents US9,689,180 and US 10,486,461. US 2012/000259 A1 discloses an anti-theft locking bolt assembly.

Anti-theft solutions to prevent access to a head of a locking bolt are disclosed in patent application publication GB2073298. This publication discloses a three- part locking bolt assembly, comprising a nut, a shroud and a key-operated lock. In this device a nose of the lock engages with the nut via a spring ring, and the lock has key-actuated detents engaging with the shroud. In DE3017879 a system is disclosed where a locking bolt is provided with a cylindrical longitudinal bore having a radially extending groove into which a corresponding outer contour of a key-operated lock attaches. Thus, in both of these approaches the lock is directly attached to the locking bolt. The problem with this kind of solution is that because they require the lock being directly attached to the locking bolt, the structures engaging the lock to the locking bolt may deteriorate upon long use and the lock no more is secure.

There are additionally various publications that disclose anti-theft or security -systems where the operation is based on a nut having a specific geometric design matching to the bolt, and a socket key having a design matching to the nut design. Examples of such publications are US patent US 10612581 and international application WO0109527. With these type of solutions, the problem is a limited number of alternative designs. Maximally such systems can provide hundreds of individual designs and therefore there is an existing thread that two locks have same keys. Moreover, these locks are inherently not very secure in a sense that they can be pulled out by hammering a non-matching socket key on the nut.

Accordingly, there is a need for additional devices and method with practically unlimited number of alternative locking codes or keys to provide security.

### SUMMARY OF THE INVENTION

In view of the above, an object of this invention is to provide a technology that addresses at least some of the above concerns. This and other objects, which will become apparent in the following, are accomplished by an assembly and a method defined in the claims.

Thus, according to a first aspect of this invention an anti-theft bolt lock assembly is provided for a locking system to prevent unauthorized removal or use of articles where the locking system is attached.

According to an aspect of this invention an anti-theft locking bolt assembly is provided, the assembly comprising: an anti-theft bolt, a bolt cap, a lock cylinder housing and a lock cylinder; the anti-theft bolt comprising a shaft and a head, the shaft having an external threading configured to match a threating of an article to be protected, and an inner channel, the head having a generally flat upper surface comprising a center bore having a noncircular perimeter; the bolt cap having a top part, a bottom part, and a central hole extending through the top and bottom parts, the top part having a perimeter larger than a perimeter of the bottom part thus forming a lip, the top part having at least one straight part on its perimeter, and the bottom part having a non- circular perimeter matching with the non-circular perimeter of the center bore, and the bolt cap being configured to be attached with attaching means onto the anti-theft bolt through the central hole when the bottom part of the bolt cap is inserted into the central bore; the cylindrical lock housing configured to cover the lock cylinder and the bolt cap and having at least one inner slot for adapting a lock stud and the lip of the bolt cap to provide a locking medium for the lock cylinder and the bolt cap, and the lock cylinder housing configured to rest on top of the anti-theft bolt head , wherein the assembly comprises means to allow at least partially free rotation of the lock cylinder housing on top of the anti-theft bolt head thus preventing transfer of torque to the anti-theft bolt; and wherein the anti-theft bolt lock assembly is in locked position when the lock cylinder housing is resting on the anti-theft bolt, the bolt cap is inserted through the upper opening of the housing such that the bottom part of the bolt cap snugly fits into the central bore, the lip of the top part rests on an lower inner edge of the at least one slot of the lock cylinder housing, and the lock cylinder is inserted through the upper opening into the lock cylinder housing and turned such that the stud extends into the slot and is blocked by an upper inner edge of the slot.

The non-circular perimeter of the bottom part and of the center bore may be a polygonal pattern, such as pentagon, hexagon, heptagon, octagon.

The inner channel of the shaft may open into the bottom of the center bore. The inner channel may be threaded and the means for attaching the bolt cap to the anti-theft bolt may be a screw. According to another embodiment the inner channel is not threaded and the means for attaching the bolt cap to the anti-theft bolt may be at least one pin.

The bolt cap may have a middle part in between the bottom and top parts. The middle part may be circular.

According to certain aspects of the invention the means to allow at least partially free rotation of the lock cylinder housing on top of the anti-theft bolt head to prevent transfer of torque to the bolt may be at least one ball bearing or at least one control washer between the lock cylinder housing and the bolt head.

The lower end of the lock cylinder housing may be flat, or it may have a circular groove to adapt the at least one bearings. According to certain aspects of the invention the lower end of the lock cylinder housing may have dents matching with flaps on the control washer.

The flat surface of the anti-theft bolt head may be smooth, or it may be patterned. The flat surface may include one or more half round indentations or the at least one indentation may be a circular groove to adapt one or more ball bearings. The flat surface may have a pattern corresponding to a pattern of a surface of the control washer.

The assembly disclosed here has multitude of locking combinations depending on length of the lock cylinder, as longer cylinder allows larger number of lock pins inside the cylinder. The assembly has at least 60 000 different combinations. The assembly may have at least 200 000 different combination, the assembly may have over 8 million combinations.

The outer threading of the anti-theft bolt may mate with threads on a vehicle wheel hub and the assembly is configured to prevent unauthorized removal of a vehicle wheel. The outer threading of the anti- theft bolt may mate with a threading of combustion engine spark plug slot and the assembly is configured to prevent unauthorized starting of the engine by replacing a spark plug with the assembly.

According to certain aspects of the invention a method is provided to prevent unauthorized removal of an article, the method comprising attaching the anti-theft lock assembly onto the article. The article may be a vehicle wheel. The article may be a vehicle having a combustion engine and the anti-theft lock assembly is used to replace a spark plug.

### BRIEF DESCRIPTION OF THE DRAWINGS

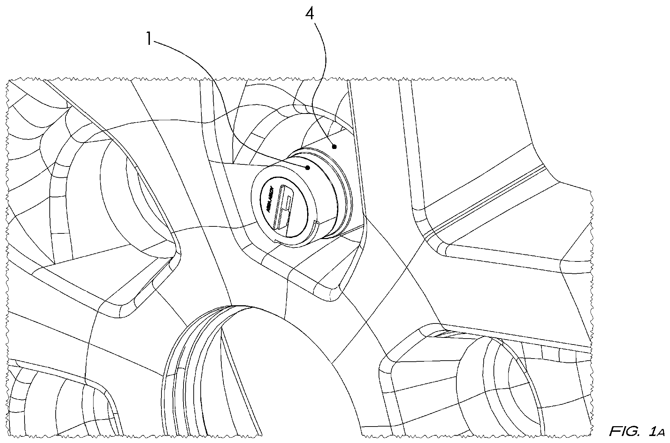

Figure 1a illustrates the anti-theft locking bolt assembly installed to secure a car wheel in place. A lock cylinder **1** of the locking bolt assembly as well as the lock cylinder housing **4** are visible in the figure. The locking bolt assembly is installed through the rim to the hub of the car wheel thus preventing removal of the wheel without removing the locking bolt assembly first.

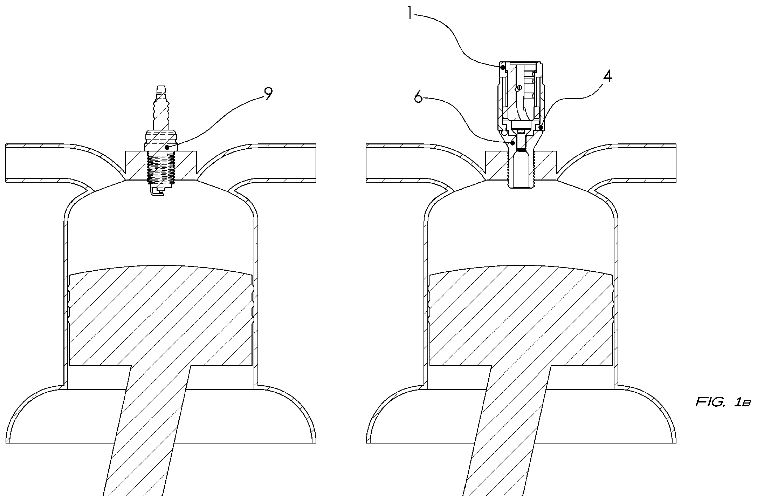

Figure 1 b illustrates an alternative use of the locking bolt assembly. Here, on the left side is illustrated a spark plug **9** attached onto a combustion engine. On the right-hand side, the spark plug has been replaced by the locking bolt assembly of the present disclosure. In the figure the anti-theft bolt **6,** the lock cylinder **1,** and the lock cylinder housing **4** are visible. The engine cannot be started without the spark plug and a new spark plug cannot be inserted before removing the locking bolt assembly.

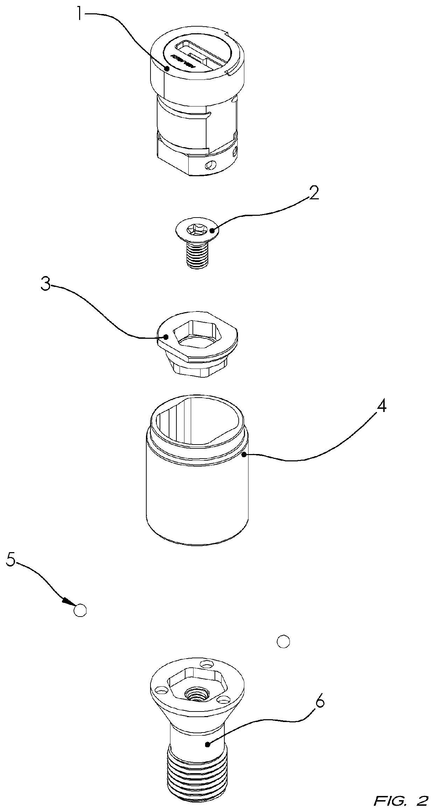

Figure 2 illustrates an exploded view of the locking bolt assembly of this disclosure. The figure shows the lock cylinder **1,** an attachment means **2** which in this embodiment is a counter sunk screw, the wheel bolt cap **3,** the lock cylinder housing **4,** the ball bearing **5,** and the anti-theft bolt **6.**

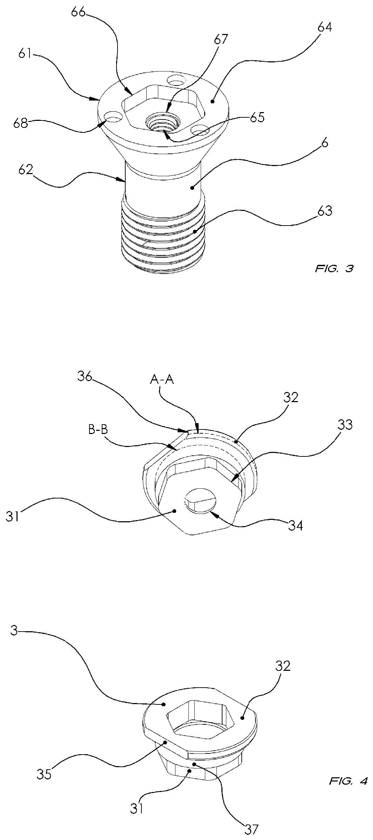

Figure 3 is a detailed drawing of the anti-theft bolt **6.** The bolt has a substantially flat head portion **61** and an externally threaded shaft **62.** The flat head portion **61** comprises a center bore **66** having a non-circular perimeter **65.** In this figure an embodiment is shown where a threaded inner channel **67** extends into to the shaft **62** and opens in the center of the bore **66.** According to other embodiments the inner channel may not be threated. The substantially flat head portion **61** has at least one indentation **68** on its surface to adapt ball bearings. The indentations shown in this embodiment are half sphere indentations each adapted for one ball bearing. The at least one indentation may equally well be a circular groove adapted for one or more ball bearings.

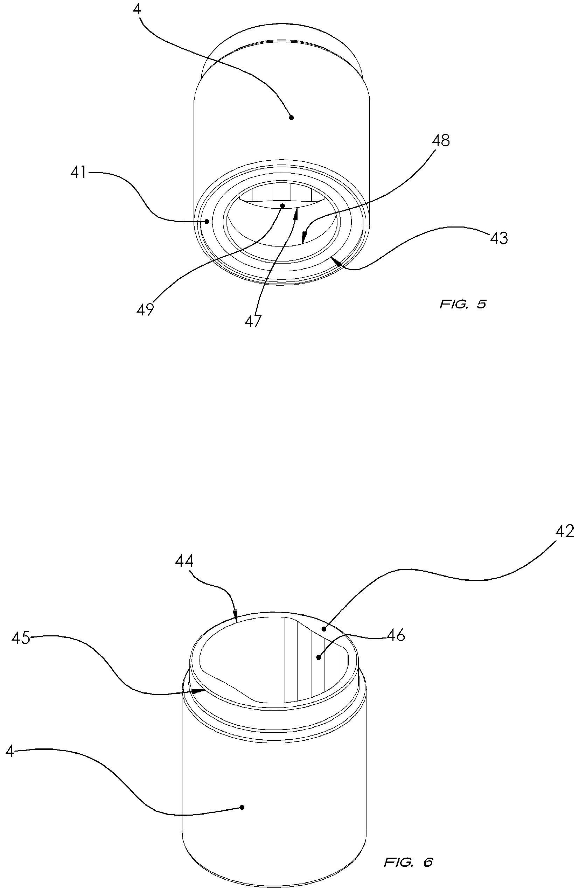

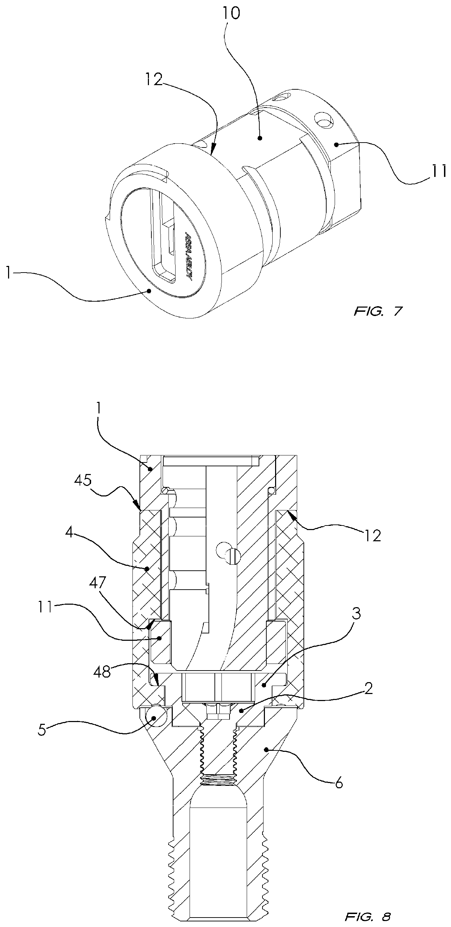

Figure 4 shows the bolt cap **3** in two perspectives. The upper view is a bottom view of the of the bolt cap and the lower view is a top view of the bolt cap. In each figure the bottom part **31** and the top part of the cap **32** is visible. Both of the figures also show the non- circular perimeter **33** of the bottom part **31.** The central hole **34** is shown in the bottom view. The top part **32** has a perimeter A-A larger than a perimeter B-B of the bottom part **31** and thus the top part forms a lip **36.** The lip **36** of the top part **32** has at least one straight part **35** on its perimeter to allow the bolt cap **3** to be entered through the upper opening **44** of the housing (shown in figure 6) in only one way. The lip **36** also has a purpose to lock the bolt cap behind a lower inner edge **48** of the housing as shown in figure 8. There may be a middle part **37** between the top part **32** and the bottom part **31** as is shown in figure 4. The middle part forms an edge that rests against the flat surface of the anti-theft lock bolt as is visible in figure 8.
Figure 5 shows a bottom view of the lock cylinder housing **4.** In this embodiment, the lower end **41** of the housing has a circular groove **43** configured to adapt the ball bearings **5** (shown in figure 2). In another embodiment the lower end of the housing **41** is flat. Visible inside the lock cylinder housing is the slot **49** forming a lower inner edge **48** and upper inner edge **47.**
Figure 6 shows the lock cylinder housing **4** with a view to the upper end **42** of the housing. The upper opening **44** has a shape such that the lock cylinder **1** and the bolt cap **3** fit through the hole only in one way, i.e. the opening has at least one flat surface **46** making the opening to have a shape matching with the shape of the lock cylinder and the bolt cap. The lock cylinder housing **4** has an outer edge **45** on which a head **12** of the lock cylinder **1** is resting as can be seen in from figure 8.
Figure 7 shows the lock cylinder **1** in locking position. The figure shows the flat surface of the lock **10** to allow the lock to be inserted into the lock cylinder housing **4** only one way when the lock cylinder is in unlocked position such that the flat surface of the lock **10** and the flat surface **46** of the upper opening of the housing match. The figure shows the stud **11** of the lock which can be turned by a key of the lock. The lock cylinder **1** is locked into the lock cylinder housing **4** by operation of the key such that the stud **11** becomes blocked behind an upper inner edge **47** (visible in figure 8) of the lock cylinder housing. The locking bolt of this invention can be made with practically endless number of variations depending on the length of the lock cylinder housing. The locking mechanism of a lock cylinder is generally based on a correct key aligning pins and allowing movement of the key plug. Due to the combinatorics the pin within the lock cylinder can be arranged in x number of ways depending on the number of the pins. Increasing the length of the cylinder allows adding more pins and the combinations will increase exponentially. In an exemplary embodiment using six pins about 66 000 combinations can be achieve. The number of combinations can be increased to over 8 million by increasing the length of the lock cylinder but still having a lock cylinder that is practicable for use.
Figure 8 shows a cross sectional view of the locking bolt assembly. The figure shows lock cylinder **1,** the lock cylinder housing **4,** the bolt cap **3,** the anti-theft bolt **6** with the threaded outer surface. The figure shows a ball bearing **5** connecting the lock cylinder housing **4** onto the anti-theft bolt **6.** The lock cylinder has a lock head **12** resting on the outer edge **45** of the lock cylinder housing. The lock stud **11** is blocked behind the upper inner edge **47** of the lock cylinder housing **4,** and the lip **36** of the bolt cap is blocked behind the lower inner edge **48** of the lock cylinder housing **4.**

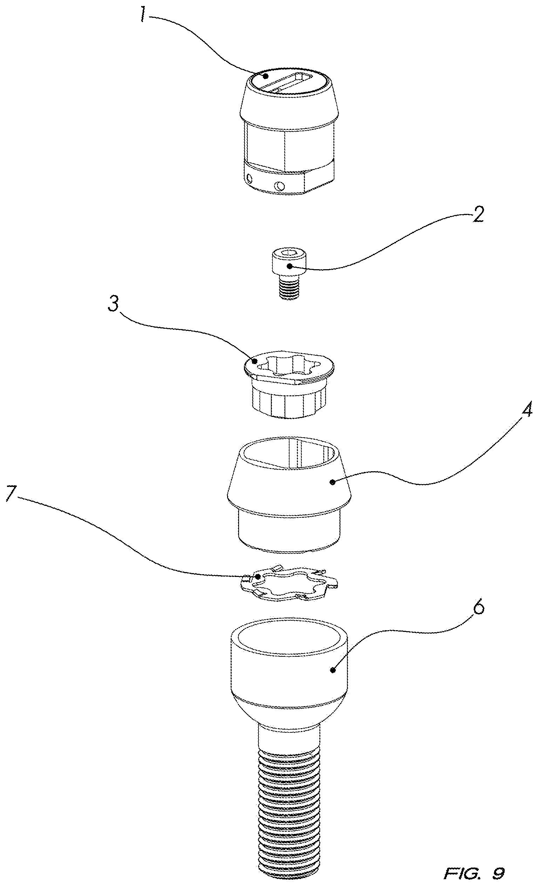

Figure 9 shows an alternative embodiment where a control washer **7** is placed between the lock cylinder housing **4** and the antitheft bolt **6.**

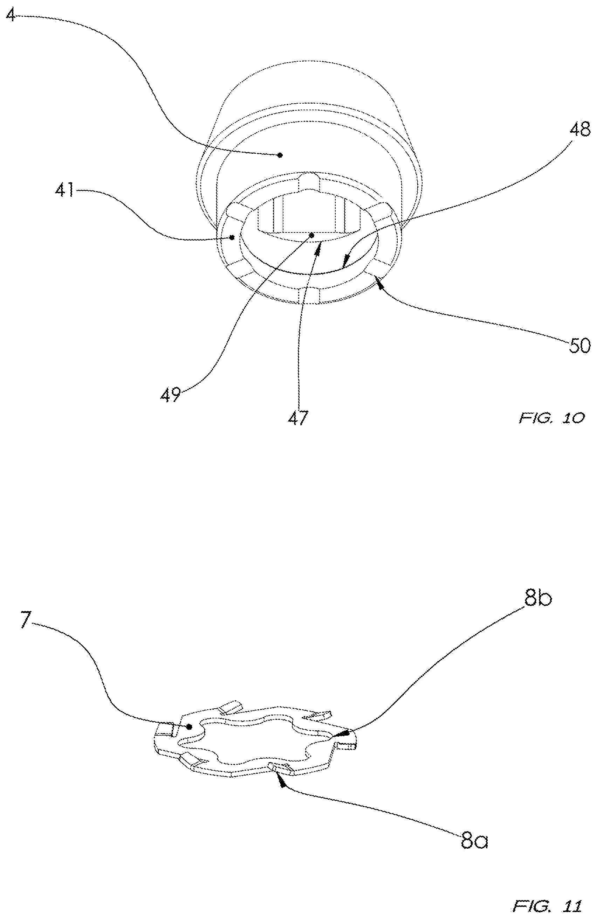

Fig. 10 shows a bottom view of the lock cylinder housing **4** having dents **50** configured to interact with the flaps **8a** on the outer perimeter of the control washer.
Fig. 11 shows the control washer **7** where the outer perimeter of the washer has multitude of flaps **8a** for interaction with corresponding number of dents **50** of the lock cylinder housing. The washer has hexlobular shape **8b** on its inner perimeter.

### DETAILED DESCRIPTION OF THE INVENTON

An anti-theft locking bolt assembly is described here to prevent unauthorized removal or use of articles onto which the assembly is attached. The locking bolt assembly can be used for preventing unauthorized removal of car wheels (Figure 1a), but the locking bolt assembly is as well suitable for example in protection of a vehicle engine from being started when a spark plug is replaced by the locking bolt assembly (Figure 1b). This can be used as an anti-theft device in preventing unauthorized use for example of boats.

The invention is now described in more details in reference to the embodiments shown in the drawings.

As is illustrated in Figure 2, the locking bolt assembly according to this disclosure comprises an anti-theft bolt **6,** a cylindrical lock housing **4,** a bolt cap **3** and a lock cylinder **1.** The assembly comprises means to allow at least partially free rotation of the lock cylinder housing **4** on top of the anti-theft bolt **6** to prevent transfer of torque to the bolt. The means as shown in figure 2 are the ball bearings **5.** The means may as well be a control washer **7** as shown in Figure 9. As illustrated in Figure 4, the bolt cap has a bottom part **31** and a top part **32** and the bottom part has a noncircular perimeter **33.** A central through hole **34** goes through the bottom and the top parts of the bolt cap. The top part **32** has a perimeter (A-A) larger than a perimeter (B-B) of the bottom part **31** thus forming a lip **36.** The lip **36** of top part **32** has at least one straight part **35** on its perimeter to allow the bolt cap **3** to be entered through the upper opening **44** of the lock cylinder housing in only one way. The upper opening of the lock cylinder housing is shown in figure 6. The lip **36** also has a purpose to block the bolt cap behind a lower inner edge **48** of the housing as shown in figure 8 and 10.

Figure 3 shows the anti-theft bolt **6** in more details. The anti-theft bolt has an external threading **63** on its shaft **62** and the threading is configured to mate with a threading in the article to which the bolt is to be attached, e.g., threading of a wheel hub, or threading in a spark plug lot in an engine. The head **61** of the anti-theft bolt has a generally flat upper surface **64** (in this context generally flat means that the head surface is not generally concave or convex). In the center of the flat surface there is a center bore **66** that has a non-circular perimeter **65.** The non-circular pattern of the perimeter of the bore matches the non-circular pattern of the bolt cap perimeter **33** (shown in Figure 4) such that the bottom part **31** of the bolt cap snugly fits into the bore **66** of the bolt head. Fitting snugly, means here that the perimeter of the bottom part of the bolt cap is in contact with the perimeter of the bore substantially from their full lengths, thus substantially preventing horizontal movement of the bottom part within the bore.

As shown in Figure 3, in one embodiment the generally flat surface of the bolt head has at least one indentation **68** around the center bore **66.** According to one embodiment, such as shown in figure 3, there are several half sphere indentations, and each is adapted for one ball bearing. The number of indentations may vary. According to some embodiments the at least one indentation is a circular groove adapted for one or more ball bearings. According to some embodiments the generally flat surface of the bolt head has a pattern that corresponds with a pattern of a surface of the control washer 7 (shown in figure 11).

The bolt cap **3** is attached onto the anti-theft bolt with attaching means. Preferably the attaching means is a screw **2** that is attached threadedly into the threaded inner channel **67** of the shaft **62** of the anti-theft bolt. The inner channel preferably opens into bottom of the center bore **66.** In another embodiment the attaching means is at least one pin that is configured to attach inside the channel of the shaft. When the attaching means is a pin, the inner channel **67** does not need to be threaded. The channel does not need to open to the center of the bore. Figure 3 shows an embodiment where the inner channel **67** inside the shaft **62** is threaded and the means to attach the bolt cap to the bolt is via a screw **2** (shown in figure 2) that has threading matching the inner threading of the inner channel **67.**

Figures 5 and 6 illustrate the structure of the lock cylinder housing **4** that is configured to cover the anti-theft bolt **6** and the bolt cap **3,** and to connect to the lock cylinder **1** and to the bolt cap **3** which is attached to the anti-theft bolt **6.** The lock cylinder housing **4** has a lower end **41** and an upper end **42.** According to certain aspects, the lower end preferably has a circular groove **43** configured to adapt one or more ball bearings **5** that are inserted into the one or more indentations **68** of the anti-theft lock **6.** The ball bearings **5** allow the lock cylinder housing **4** to turn on top of the anti-theft bolt **6,** thereby providing an additional security feature as preventing turning of the anti-theft bolt by turning the housing. According to certain aspects, the lower end of the lock cylinder housing has dents **50** that match with flaps **8a** on an outer perimeter of a control washer (shown in figures 10 and 11). In this embodiment, the flaps of the control washer interact with the same number of dents on the lower end of lock cylinder housing. The washer temporarily locks the rotation of the lock cylinder housing relative to the bolt for the purpose of maneuvering the lock cylinder key between the open and closed position. If more torque is applied than what is necessary to maneuver the key, the flaps of the washer will flatten and allow the lock cylinder housing to rotate relative to bolt and bolt head preventing torque from being transferred to the bolt.

According to certain embodiments, the groove **43** is optional, and in another embodiment the lower end **41** of the housing is flat. In this embodiment the lock cylinder housing **4** is also turning on top of the anti-theft bolt **6,** now only the ball bearings **5** roll on the lower flat edge of the lock cylinder housing **4.**

Figure 8 shows a cross sectional view of the device when assembled and the location of the ball bearings **5** can be seen between the flat surface of the anti-theft bolt and the lower end of the housings.

The upper opening **44** of the lock cylinder housing **4** has at least one flat surface **46.** The flat surface enables insertion of the lock cylinder **1** as well as the bolt cap **3** in only one position such that the flat surface **10** of the lock cylinder **1** or the straight part **35** of the perimeter of the top part of the bolt cap slides along the flat surface **10** of the housing. Behind the flat surface **44** (meaning here into direction toward the lower end of the lock cylinder housing) there is at least one slot **49** into which the stud **11** can be turned. The at least one slot **49** has an upper inner edge **47** and a lower inner edge **48** and the at least one slot is used to block both the lock cylinder **1** and the bolt cap **3** in their place: Figure 8 shows the lock stud **11** is blocked by upper inner edge **47** of the slot and the lip **36** of the is blocked by the lower inner edge **48** of the slot. Thus, when the anti-theft lock assembly is in locked position, the lock cannot be removed from the lock cylinder housing because the stud is blocked by the upper inner edge. The cylinder housing cannot be removed, because the lower inner edge is blocked by the lip of the bolt cap and the bolt cap is attached to the antitheft bolt **6** which again is threated to the article to be protected. The ball bearing connection between the anti-theft bolt **6** and the lock cylinder housing **4** prevents any kind or turning of the anti-theft bolt because the lock cylinder housing is rotating freely on the ball bearings. Instead of the ball bearings between the bolt cap and the lock cylinder housing, the assembly of this invention may as well use the control washer 7 to provide the rotation of the lock cylinder housing on the bolt as is shown in figures 9,10 and 11. In this case the free rotation is temporarily locked (i.e. the free rotation is partial) when the flaps **8a** of the washer coincide with the dents **50** of the lock cylinder housing. This is practical for the purpose of maneuvering the lock cylinder key between the open and closed positions. However, the control washer also provides free rotation of the lock cylinder housing on top of the bolt if more torque is applied than is necessary to turn the key because in such case the flaps will flatten and allow the lock cylinder housing to freely rotate. Thus, whether ball bearings or control washer is used, the result is an extra layer of protection as the free rotation of the lock cylinder housing prevents torque to be transferred to the bolt.

This enables assembly of the bolt lock in its place such that the lock housing is resting on antitheft bolt after which the bolt cap is inserted through the upper opening of the housing and due to the matching shape of the upper opening and the top part of the bolt cap, the bolt cap goes through the housing in one position only, which position is such that the non-circular shape of the bottom part of the bolt cap automatically matches with the non-circular shape of the bore of the anti-theft bolt.

The assembly disclosed here has multitude of locking combinations depending on length of the lock cylinder. Preferably the assembly has at least 60 000 different combinations. The assembly may have 100 000 different combinations, 200 000 combination and even up to 8 million combinations. Accordingly, the assembly disclosed and claimed here provides a remarkable improvement as compared to any existing devices in the security.

Other variations to the disclosed embodiments can be understood and effected by those skilled in the art in practicing the claimed invention, from a study of the drawings, the disclosure and the appended claims. In the claims, the word 'comprising' does not exclude other elements or steps, and the indefinite article 'a' or 'an' does not exclude a plurality. The mere fact that certain measures are recited in mutually different dependent claims does not indicate that a combination of these measures cannot be used to advantage. Any reference signs in the claims should not be construed as limiting the scope.

### List of elements

1 lock cylinder
2 counter sunk screw
3 bolt cap
4 lock cylinder housing
5 ball bearing
6 anti-theft bolt
7 control washer
8a flaps on an outer perimeter of the control washer
8b hexalobular shape of the inner perimeter of the control washer
9 spark plug
10 flat surface of the lock
11 stud
12 lock head
31 bottom part of the bolt cap
32 top part of the bolt cap
33 non circular perimeter of the bottom part
34 central hole of the bolt cap
35 straight part on the perimeter of the top part
36 lip
37 middle part
41 lower end of the housing
42 upper end of the housing
43 circular groove
44 upper opening of the housing
45 outer edge of the housing
46 flat surface of the upper opening
47 upper inner edge of the housing
48 lower inner edge of housing
49 slot
50 dents on the lower end of the housing
61 Head portion of the anti-theft bolt
62 shaft
63 external threading
64 flat upper surface
65 non circular perimeter of the center bore
66 center bore
67 threaded inner channel

## Claims

1. An anti-theft locking bolt assembly comprising:
an anti-theft bolt (6), a bolt cap (3), a lock cylinder housing (4), and a lock cylinder (1);
the anti-theft bolt comprising a shaft (62) and a head (61),
the shaft (62) having an external threading (63) configured to match a threading of an article to be protected, and an inner channel (67),
the head having a generally flat upper surface (64) comprising a center bore (66) having a noncircular perimeter (65);
the bolt cap (3) having a top part (32), a bottom part (31), and a central hole (34) extending through the top (32) and bottom parts (31),
the top part (32) having a perimeter larger than a perimeter of the bottom part (31) thus forming a lip (36), the top part (32) having at least one straight part (35) on its perimeter, and
the bottom part (31) having a non- circular perimeter (33) matching with the non-circular perimeter of the center bore (65), and the bolt cap (3) being configured to be attached with attaching means onto the anti-theft bolt (6) through the central hole (34) when the bottom part of the bolt cap (31) is inserted into the center bore (36);
the lock cylinder housing (4) configured to cover the lock cylinder (1) and the bolt cap (3) and having at least one inner slot (49) for adapting a lock stud (11) and the lip (36) of the bolt cap (3) to provide a locking medium for the lock cylinder (1) and the bolt cap (3), and the lock cylinder housing (4) configured to rest on top of the anti-theft bolt (6) head, wherein the assembly comprises means to allow at least partially free rotation of the lock cylinder housing (4) on top of the anti-theft bolt head (61) to prevent transfer of torque to the anti-theft bolt (6); and
wherein the anti-theft bolt lock assembly is in locked position when the lock cylinder housing (4) is resting on the anti-theft bolt (6), the bolt cap (3) is inserted through an upper opening (44) of the housing such that the bottom part (31) of the bolt cap snugly fits into the center bore (66), the lip (36) of the top part rests on a lower inner edge (48) of the at least one slot of the lock cylinder housing (4), and the lock cylinder (1) is inserted through the upper opening (44) into the lock cylinder housing (4) and turned such that the stud (11) extends into the slot (49) and is blocked by an upper inner edge of the slot.

2. The assembly of claim 1, wherein the non-circular perimeter of the bottom part and of the center bore has a polygonal pattern.

3. The assembly of any one of claims 1 or 2, wherein the inner channel of the shaft opens into the bottom of the center bore.

4. The assembly of claim 3, wherein the means for attaching is a screw and the inner channel is threaded.

5. The assembly of claim 1, wherein the means to allow at least partially free rotation of the lock cylinder housing comprises one or more ball bearings (5) placed between the lock cylinder housing and the anti-theft bolt head.

6. The assembly of claim 5, wherein the flat surface of the anti-theft bolt comprises indentations to adapt the one or more ball bearings.

7. The assembly of claim 5 or 6, wherein the lower end (41) of the lock cylinder housing has a circular groove (43) to adapt the at least one bearing.

8. The assembly of claim 1, wherein the means to allow at least partially free rotation of the lock cylinder housing comprises at least one control washer (7) placed between the lock cylinder housing and the anti-theft bolt head.

9. The assembly of claim 8, wherein the lower edge of the lock cylinder housing comprises dents corresponding to flaps (8a) on an outer circumference of the at least one control washer.

10. The assembly of claim 1, wherein the bolt cap has a middle part (37) between the bottom and the top parts.

11. The assembly of claim 1, wherein the assembly has multitude of locking combinations, preferably at least 60,000 combinations depending on length of the lock cylinder.

12. The assembly of claim 1, wherein the outer threading of the anti-theft bolt mates with threads on a vehicle wheel hub, and the assembly is configured to prevent unauthorized removal of a vehicle wheel.

13. The assembly of claim 1, wherein the outer threading of the anti-theft bolt mates with a threading of combustion engine spark plug slot, and the assembly is configured to prevent unauthorized starting of the engine by replacing a spark plug (9) with the assembly.

## Patentansprüche

1. Verriegelungsbolzenanordnung zur Diebstahlsicherung, umfassend:
einen Diebstahlsicherungsbolzen (6), eine Bolzenkappe (3), ein Verriegelungszylindergehäuse (4) und einen Verriegelungszylinder (1);
wobei der Diebstahlsicherungsbolzen einen Schaft (62) und einen Kopf (61) umfasst,
wobei der Schaft (62) ein Außengewinde (63) aufweist, das konfiguriert ist, um mit dem Gewinde eines zu schützenden Gegenstands übereinzustimmen, und einen Innenkanal (67),
wobei der Kopf eine im Allgemeinen flache Oberseite (64), umfassend eine Mittelbohrung (66) mit einem nicht kreisförmigen Umfang (65), aufweist;
wobei die Bolzenkappe (3) einen oberen Abschnitt (32), einen unteren Abschnitt (31) und ein zentrales Loch (34) aufweist, das sich durch die oberen (32) und die unteren Abschnitte (31) erstreckt,
wobei der obere Abschnitt (32) einen größeren Umfang als ein Umfang des unteren Abschnitts (31) aufweist und somit eine Lippe (36) bildet, wobei der obere Abschnitt (32) an seinem Umfang mindestens einen geraden Abschnitt (35) aufweist, und
wobei der untere Abschnitt (31) einen nicht kreisförmigen Umfang (33) aufweist, der mit dem nicht kreisförmigen Umfang der Mittelbohrung (65) übereinstimmt, und die Bolzenkappe (3) konfiguriert ist, um mit Befestigungsmitteln durch das Mittelloch (34) an dem Diebstahlsicherungsbolzen (6) befestigt zu werden, wenn der untere Abschnitt der Bolzenkappe (31) in die Mittelbohrung (36) eingesetzt wird;
wobei das Verriegelungszylindergehäuse (4) konfiguriert ist, um den Verriegelungszylinder (1) und die Bolzenkappe (3) abzudecken und mindestens einen inneren Schlitz (49) aufweist, um einen Verriegelungsbolzen (11) und die Lippe (36) der Bolzenkappe (3) anzupassen, um ein Verriegelungsmedium für den Verriegelungszylinder (1) und die Bolzenkappe (3) bereitzustellen, und wobei das Verriegelungszylindergehäuse (4) konfiguriert ist, um auf der Oberseite des Kopfs des Diebstahlsicherungsbolzens (6) aufzuliegen, wobei die Anordnung Mittel umfasst, die eine mindestens teilweise freie Drehung des Verriegelungszylindergehäuses (4) auf der Oberseite (61) des Diebstahlsicherungsbolzens ermöglichen, um eine Drehmomentübertragung auf den Diebstahlsicherungsbolzen (6) zu verhindern; und
wobei sich die Diebstahlsicherungsbolzen-Verriegelungsanordnung in verriegelter Position befindet, wenn das Verriegelungszylindergehäuse (4) auf dem Diebstahlsicherungsbolzen (6) ruht, die Bolzenkappe (3) durch eine obere Öffnung (44) des Gehäuses eingesetzt ist, so dass der untere Abschnitt (31) der Bolzenkappe eng in die Mittelbohrung (66) passt, die Lippe (36) des oberen Abschnitts auf einer unteren Innenkante (48) des mindestens einen Schlitzes des Verriegelungszylindergehäuses (4) ruht und der Verriegelungszylinder (1) durch die obere Öffnung (44) in das Verriegelungszylindergehäuse (4) eingeführt und so gedreht wird, dass der Bolzen (11) in den Schlitz (49) hineinragt und durch eine obere Innenkante des Schlitzes blockiert wird.

2. Anordnung nach Anspruch 1, wobei der nicht kreisförmige Umfang des unteren Abschnitts und der Mittelbohrung ein polygonales Muster aufweist.

3. Anordnung nach einem der Ansprüche 1 oder 2, wobei sich der innere Kanal der Welle in den Boden der Mittelbohrung hinein öffnet.

4. Anordnung nach Anspruch 3, wobei das Mittel zum Befestigen eine Schraube ist und der innere Kanal ein Gewinde aufweist.

5. Anordnung nach Anspruch 1, wobei das Mittel, das eine mindestens teilweise freie Drehung des Verriegelungszylindergehäuses ermöglicht, ein oder mehrere Kugellager (5) umfasst, die zwischen dem Verriegelungszylindergehäuse und dem Kopf des Diebstahlschutzbolzens angeordnet sind.

6. Anordnung nach Anspruch 5, wobei die flache Oberfläche des Diebstahlsicherungsbolzens Vertiefungen zur Aufnahme des einen oder der mehreren Kugellager aufweist.

7. Anordnung nach Anspruch 5 oder 6, wobei das untere Ende (41) des Verriegelungszylindergehäuses eine kreisförmige Nut (43) zur Aufnahme des mindestens einen Lagers aufweist.

8. Anordnung nach Anspruch 1, wobei das Mittel, das eine mindestens teilweise freie Drehung des Verriegelungszylindergehäuses ermöglicht, mindestens eine Steuerscheibe (7) umfasst, die zwischen dem Verriegelungszylindergehäuse und dem Kopf des Diebstahlsicherungsbolzens angeordnet ist.

9. Anordnung nach Anspruch 8, wobei die Unterkante des Verriegelungszylindergehäuses Vertiefungen aufweist, die Klappen (8a) an einem Außenumfang der mindestens einen Steuerscheibe entsprechen.

10. Anordnung nach Anspruch 1, wobei die Bolzenkappe zwischen dem unteren und dem oberen Abschnitt einen mittleren Abschnitt (37) aufweist.

11. Anordnung nach Anspruch 1, wobei die Anordnung eine Vielzahl von Verriegelungskombinationen aufweist, vorzugsweise mindestens 60.000 Kombinationen, abhängig von der Länge des Verriegelungszylinders.

12. Anordnung nach Anspruch 1, wobei das Außengewinde des Diebstahlsicherungsbolzens mit dem Gewinde einer Fahrzeugradnabe zusammenpasst und die Anordnung konfiguriert ist, um das unbefugte Entfernen eines Fahrzeugrads zu verhindern.

13. Anordnung nach Anspruch 1, wobei das Außengewinde des Diebstahlsicherungsbolzens mit einem Gewinde des Zündkerzenschlitzes eines Verbrennungsmotors zusammenpasst und die Anordnung konfiguriert ist, um ein unbefugtes Starten des Motors durch Ersetzen einer Zündkerze (9) durch die Anordnung zu verhindern.

## Revendications

1. Ensemble de boulons de verrouillage antivol comprenant :
un boulon antivol (6), un capuchon de boulon (3), un boîtier de barillet de serrure (4) et un barillet de serrure (1) ;
le boulon antivol comprend une tige (62) et une tête (61),
la tige (62) ayant un filetage externe (63) conçu pour correspondre au filetage d'un article à protéger, et un canal interne (67),
la tête ayant une surface supérieure généralement plate (64) comprenant un alésage central (66) ayant un périmètre non circulaire (65) ;
le capuchon de boulon (3) ayant une partie supérieure (32), une partie inférieure (31) et un trou central (34) traversant les parties supérieure (32) et inférieure (31),
la partie supérieure (32) ayant un périmètre plus grand que le périmètre de la partie inférieure (31) formant ainsi une lèvre (36), la partie supérieure (32) ayant au moins une partie droite (35) sur son périmètre, et
la partie inférieure (31) ayant un périmètre non circulaire (33) correspondant au périmètre non circulaire de l'alésage central (65), et le capuchon de boulon (3) étant conçu pour être fixé avec des moyens de fixation sur le boulon antivol (6) à travers le trou central (34) lorsque la partie inférieure du capuchon de boulon (31) est insérée dans l'alésage central (36) ;
le boîtier de barillet de serrure (4) conçu pour couvrir le barillet de serrure (1) et le capuchon de boulon (3) et ayant au moins une fente intérieure (49) pour adapter un goujon de serrure (11) et la lèvre (36) du capuchon de boulon (3) afin de fournir un moyen de verrouillage pour le barillet de serrure (1) et le capuchon de boulon (3), et le boîtier du barillet de serrure (4) conçu pour reposer sur la tête du boulon antivol (6), dans lequel l'ensemble comprend des moyens permettant une rotation au moins partiellement libre du boîtier du barillet de serrure (4) sur la tête du boulon antivol (61) afin d'empêcher le transfert du couple au boulon antivol (6) ; et
dans lequel l'ensemble de serrure à boulon antivol est en position verrouillée lorsque le boîtier du barillet de serrure (4) repose sur le boulon antivol (6), le capuchon de boulon (3) est inséré à travers une ouverture supérieure (44) du boîtier de telle sorte que la partie inférieure (31) du capuchon de boulon s'insère parfaitement dans l'alésage central (66), la lèvre (36) de la partie supérieure repose sur un bord intérieur inférieur (48) de l'au moins une fente du boîtier du barillet de serrure (4), et le barillet de serrure (1) est inséré par l'ouverture supérieure (44) dans le boîtier du barillet de serrure (4) et tourné de manière à ce que le goujon (11) s'étende dans la fente (49) et soit bloqué par un bord intérieur supérieur de la fente.

2. Ensemble selon la revendication 1, dans lequel le périmètre non circulaire de la partie inférieure et de l'alésage central présente un motif polygonal.

3. Ensemble selon l'une quelconque des revendications 1 ou 2, dans lequel le canal intérieur de la tige débouche dans le fond de l'alésage central.

4. Ensemble selon la revendication 3, dans lequel le moyen de fixation est une vis et le canal intérieur est fileté.

5. Ensemble selon la revendication 1, dans lequel les moyens permettant une rotation au moins partiellement libre du boîtier du barillet de serrure comprennent un ou plusieurs roulements à billes (5) placés entre le boîtier du barillet de serrure et la tête du boulon antivol.

6. Ensemble selon la revendication 5, dans lequel la surface plate du boulon antivol comprend des indentations pour adapter un ou plusieurs roulements à billes.

7. Ensemble selon la revendication 5 ou 6, dans lequel l'extrémité inférieure (41) du boîtier du barillet de serrure comporte une rainure circulaire (43) pour adapter l'au moins un roulement.

8. Ensemble selon la revendication 1, dans lequel permettant au moins partiellement la libre rotation du boîtier de barillet de serrure comprend au moins une rondelle de contrôle (7) placée entre le boîtier de barillet de serrure et la tête de boulon antivol.

9. Ensemble selon la revendication 8, dans lequel le bord inférieur du boîtier de barillet de serrure comprend des bosses correspondant à des languettes (8a) sur une circonférence extérieure de l'au moins une rondelle de contrôle.

10. Ensemble selon la revendication 1, dans lequel le capuchon de boulon a une partie centrale (37) entre les parties inférieure et supérieure.

11. Ensemble selon la revendication 1, dans lequel l'ensemble possède une multitude de combinaisons de verrouillage, de préférence au moins 60 000 combinaisons en fonction de la longueur du barillet de serrure.

12. Ensemble selon la revendication 1, dans lequel le filetage extérieur du boulon antivol s'adapte aux filets d'un moyeu de roue de véhicule, et l'assemblage est conçu pour empêcher le démontage non autorisé d'une roue de véhicule.

13. Ensemble selon la revendication 1, dans lequel le filetage extérieur du boulon antivol correspond à un filetage de la fente de la bougie d'allumage du moteur à combustion, et l'ensemble est conçu pour empêcher le démarrage non autorisé du moteur par le remplacement d'une bougie d'allumage (9) avec l'ensemble.
